# EUROPEAN PATENT APPLICATION

(11) **EP 2 677 067 A1**
(43) Date of publication of application: **25.12.2013**
(21) Application number: 12714028.3
(22) Date of filing: 15.02.2012
(51) Int. Cl.: C25D 5/48, C25D 5/50, C25D 7/10, F16C 33/14, F16C 33/12

(54) **METHOD FOR PRODUCING SINTERED SLIDING BEARINGS**

(30) Priority: 15.02.2011 ES 201130199
(71) Applicant: Sinterizados Y Metalurgia De Solsona, S.A., 08980 Sant Feliu De Llobregat (Barcelona) (ES)
(72) Inventor: CALERO MARTÍNEZ, Jose, Antonio, 08980 Sant Feliu De Llobregat (Barcelona) (ES); CABESTANY ROCA, Francesc, 08980 Sant Feliu De Llobregat (Barcelona) (ES); MONTERDE GASCÓN, Mari, Carmen, 08980 Sant Feliu De Llobregat (Barcelona) (ES)
(74) Representative: Carpintero Lopez, Francisco
(86) International application number: PCT/ES2012/070089
(87) International publication number: WO 2012/110676

(57) **Abstract**

The present invention provides a process for manufacturing sintered sliding bearings by means of a powder metallurgy process.

The process is characterised by including a porous surface coating (5) of soft metal in the central hole of the coupling matrix of the shaft (2), such that the sealing by plastic deformation of the pores (7) of the coating is facilitated.

## Description

### Object and Technical Field of the Invention

The object of the present invention is to provide a process for manufacturing sliding bearings and generally for manufacturing tribological systems comprising a bearing (or support) and a rotating shaft (or tree).

The invention relates to porous bearings (or self-lubricating bearings) within the family of sliding bearings, which are also called friction bearings. The present invention is particularly conceived for porous sliding sintered bearings which are obtained through a powder metallurgy manufacturing process.

### Background of the Invention

Both lubricated and non-lubricated sliding bearings, the latter being called as dry friction bearings, are well known in the state of the art. Lubricating has a dual purpose: on one hand to reduce the friction between the shaft and bearing, and on the other to maintain a suitable spacing in the contact area during the operation of the bearing.

There are three basic regimes of lubrication during operation: hydrodynamic lubrication, slippery lubrication and mixed lubrication.

Hydrodynamic regime is the ideal operating regime for sliding bearings. A lubricating film capable of maintaining the required hydrodynamic pressure is generated in the contact area between the shaft and bearing in this regime. The regime can be broken by excessive load or speed. Theoretically, there are two conditions which must be met in order to maintain the hydrodynamic regime associated with the operation of the sliding bearing. The first condition is that the Reynolds number should be small, i.e., when p·U·h/η≤1 (p: lubricant density, U: speed of movement, h: clearance between shaft and bearing, η: lubricant viscosity). The second condition is that there should be a certain clearance between shaft and bearing and the bearing should be small enough.

Slippery regime occurs when the lubricating film cannot be formed in the contact area between shaft and bearing. There is only one molecular layer in the contact area in this situation, usually made up of additives of the lubricant. This regime occurs in the normal operation of the system during the start-up and shut-down stages.

Lastly, mixed regime is a transitional phase between the hydrodynamic regime and the slippery regime.

As has been indicated above, the invention relates to porous sliding bearings which are called self-lubricating bearings. The porosity allows storing and retaining lubricant inside the pores of the bearing inter-linked by means of capillary forces, providing a sufficient amount of lubricant to the contact area during operation. The porous sliding bearings are therefore particularly useful when there is a lack of space or inaccessibility for lubricating, being characterised by its easy assembly and maintenance, durability, reliability and low cost.

The sintered porous bearings comprise an annular metal matrix which usually has a thickness which can vary between 0.5 and several millimeters. The matrix is obtained by means of a powder metallurgy manufacturing process which allows providing the porosity in volume required for these bearings, conventionally comprised in the range of 15% to 35%. These values of thickness and porosity are approximate values for estimation and clarification purposes but are non-limiting with respect to the present invention.

The basic steps of a powder metallurgy process are the following:
- Mixing the metal powder;
- Compacting; and
- Sintering.

Sintering consists of subjecting the matrix to a treatment at controlled atmosphere and temperature. The sintering temperature can reach approximately 75% of the melting temperature of the material. Sintering confers the required mechanical properties to the matrix, maintaining the required porosity for assuring the self-lubrication of the bearing.

Additionally, the powder metallurgy manufacturing process can include the following finishing processes:
- Calibrating;
- Machining; and
- Surface treatments.

Calibrating consists of recompacting the matrix for the purpose of improving the dimensional precision by pressing.

Machining and grinding allows further improving the dimensional precision but by devastating or grinding the material.

With respect to the surface treatments applied to sintered sliding bearings, first, surface treatments which consist of providing a thin coating to the substrate of the matrix of the bearing on the contact surface such as for example by electroplating, galvanizing (cold or hot), thermal projection or laminating are known. Logically, the surface coating must be thin enough as to not nullify the self-lubricating function of the bearing by blocking the pores of the matrix. According to the selected metal or the coating process property improvements including, among others, resistance to oxidation, wear and seizing of the matrix can be achieved, some of which are detailed below due to their relative similarity to the invention.

Firstly, a thin surface coating of soft metal such as for example copper, allows a relatively better placement of the shaft during operation, which leads to an improvement in the reduction of noises and structural fatigue of the matrix.

Secondly, a surface coating of the matrix for blocking the pores in the contact surface thereof (obviously partially blocking the pores of the contact surface of the matrix) providing a relative improvement in the coefficient of friction during operation. This is due to the fact that the driving of the shaft produces a hydrodynamic pressure of the lubricant in the loaded area during the operation of the bearing. As a result of this pressure the lubricant is absorbed through the pores into the bearing, being expelled through the least loaded area. Therefore, the hydrodynamic regime is not optimally formed since the porosity of the contact surface of the bearing prevents the lubricating film from being sustained. Therefore, a surface coating for partially blocking the pores allows increasing the load resistance of the bearing and therefore sustaining the hydrodynamic film improving the operating coefficient of friction of the bearing. Various methods are known in the state of the art for sealing or partially closing the pores on the surface. Patent application US-2003/003157, for example, describes a method for sealing pores by impregnating the surface with a resin and the subsequent curing thereof.

Another family of surface treatments applied to sintered bearings which aim to achieve the same previous effect of closing pores in order to reduce the operating coefficient of friction but in a different manner, specifically by plasticizing the material of the matrix on the contact surface is also known. Therefore, a method of applying a surface treatment for sealing the pores by plasticizing the material of the contact surface based on compacting said surface by thermal expansion can be found in patent ES-2015607. Another method for sealing the pores by plasticizing the material of the contact surface by means of pressing or rolling a tool over said surface can be found in the validation document ES-0949427.

On the other hand, the metals which are more frequently used for manufacturing the sintered sliding bearing matrix are: iron, steel, copper, bronze and brass. Sintered bearings are commonly obtained based on mixing different metal and carbon powder, some examples of materials well known for their use in sintered bearings are the following:
- Sintered iron (based on mixing pure iron powders);
- Sintered steel with a low copper content (based on mixing metal powders consisting of carbon (<0.3%), copper (1-5%) and the rest being pure iron);
- Sintered steel with a high copper content (based on mixing metal powders consisting of carbon (<0.3%), copper (20%) and the rest being pure iron); and
- Sintered bronze (based on mixing metal powders consisting of carbon (<0.2%), tin (9-10%) and the rest being pure copper):

In the present specification "copper-based" sintered metal is understood as the sintered metal formed by a mixture comprising mainly copper (mutatis mutandis sintered "iron-based" metal, any other "metal-based" metal).

The sintered bearings with a copper-based matrix have the technical advantage with respect to the sintered bearings with an iron-based matrix where the copper-based sintered bearing is relatively soft on the surface. Consequently, the copper-based matrix per se incorporates the properties of a better placement of the shaft, and therefore reduced levels of friction and noise and greater structural fatigue life.

For the purpose of the present specification, soft material is understood as the material with a surface hardness substantially equal to or less than that of the sintered copper metal. In comparison, hard material is understood as the material which is not soft. For example, sintered iron and steel are considered hard metals. In contrast, copper, bronze and brass are considered soft metals. Obviously, what has been stated about the bearings with copper-based matrix in the paragraph above should be stated for the bearings with soft metal matrix, with respect to the bearings with hard metal matrix.

Additionally, an important aspect of the sintered bearings with soft metal matrix, such as for example copper, is that they have the advantage that, due precisely to the softer surface of the material, the sealing of the pores of the matrix by plasticizing is facilitated. As has been explained above, this provides an improvement of the coefficient of friction of the operating bearing. Surface plasticification of the bearings having soft metal matrix is commonly carried out in a natural manner simply during the rolling process itself or while putting the bearing in use for the first time.

On the other hand, the sintered bearings with an iron-based matrix have the comparative advantage of its lower cost and the technical advantage derived from its greater hardness providing better initial coefficients of friction, i.e. during start-up, when the lubricating film has not yet formed (usually within the first 5 seconds of operation). This is due to the fact that the initial coefficient of friction greatly depends on the area of the contact surface between the shaft and bearing; the greater the contact surface, the greater the initial coefficient of friction. Hard metal matrix deforms far less than soft metal matrix in initially and therefore has less contact surface.

Obtaining a sintered sliding bearing which would simultaneously maintain the technical advantages of the bearings with soft metal matrix and the bearings with hard metal matrix would therefore be desirable. With respect to this technical problem, a first solution consists of providing a thin coating, for example by electroplating, of a soft metal on the contact surface of the hard metal matrix, said coating being thin enough as to not completely obstruct the porosity of the matrix. The pores are sealed by depositing the metal itself inside the pores. This solution has the drawback that the effect of improving the placement of the shaft and therefore reducing noises and increasing the fatigue life of the matrix is not significant since the layer of soft metal has to be thin enough.

A second known solution is disclosed in the patent document JP-5087144. This document describes a double-layered sintered bearing which is obtained by sintering a green compacting matrix which has an iron-based inner layer and a copper-based surface layer. The patent provides a solution to the problem of sintering different metals, such as copper and iron, consisting of the fact that since they have different sintering temperatures (since the melting temperature of iron is higher than the melting temperature of copper) this leads to an incomplete sintering and therefore a loss in the mechanical properties of the matrix. In the case of this solution, the pores are also sealed by blocking the coating itself and the thickness of the copper-based surface layer, as in the above solution, it must be thin enough as to not completely close the pores of the iron-based inner layer. The patent document specifies a thickness comprised between 0.2 µm and 1.5 µm.

Finally, a double- or multi-layered sintered bearing, i.e., in which the different adjacent layers are attached by successive resintering also does not solve the problem. In this case, the resintered layers are attached to one another by metal welding or diffusion which also leads to the blocking of the pores of the interphase and therefore invalidating the self-lubricating function of the bearing.

Taking the above into account, the present invention aims to provide a solution to the described technical problem overcoming the drawbacks of the known solutions and showing improvements.

### Description of the Invention

For the purpose of solving the described technical problem and achieving improvements in the sintered sliding bearings, the proposed invention provides the technical features and effects which are described below.

The sintered bearings of the invention are characterised by having an annular matrix, which is obtained by a powder metallurgy manufacturing process, and a porous coating of soft metal applied in the central hole of the matrix to which the rotating shaft is coupled, i.e. on the surface of the matrix in the contact area thereof.

Unlike the surface coatings known in the state of the art, the surface coating of the invention is porous and such that the sealing by plastic deformation of the pores of the coating is facilitated, which as has been indicated above, provides the technical effect of reducing the operating coefficient of friction. In this sense, it is important to highlight that, unlike what happens in the known solutions of the prior state of the art, the sealing is not caused by the (partial) filling of the pores of the matrix of the bearing, rather the surface coating of the present invention completely covers the outer surface of the matrix but the coating is porous to preserve the self-lubricating functionality of the bearing.

The porous coating of soft metal of the invention allows incorporating the technical advantage where it provides a better placement of the shaft in the bearing, therefore reducing the level of noises and increasing the structural fatigue life and generally the durability of the bearing.

Optionally, the invention also contemplates that the matrix of the bearing is fixed to an outer support by its face opposite the central hole. Said outer support can be of any material, such as for example metal (machined or sintered), composite, plastic, ceramic, etc. The fixing between the outer support and the matrix can also be of any type, such as for example: thermal fixing (e.g. welding, diffusion), mechanical fixing (e.g. gripping, laminating), chemical fixing (e.g. adhesive), etc. Including an outer support in the bearing can, for example, be useful as a protecting element, and for stiffening or increasing the mechanical strength of the bearing thus allowing reducing the requirements of the matrix, being able, for example, to have less thickness, and therefore reducing the manufacturing cost.

It is considered that the matrix of the bearing of the invention could be of any type of sintered metal, but it is preferably a hard metal matrix, such as for example an iron-based matrix. As pointed out in the background section, this feature provides the technical advantage of reducing the initial coefficient of friction. The sintered sliding bearings of the invention thus provide an optimum combination of low initial and operating coefficients of friction. This improvement additionally allows significantly reducing the manufacturing cost taking into account that the cost of iron-based metal is less than copper-based metal.

For illustrative and estimation purposes, the manufacturing process of the invention allows obtaining bearings with operating coefficients of friction of approximately 0.01 to 0.05 and initial coefficients of friction of approximately 0.1, for test conditions with factor P·v=18 Kp/cm²·m/s (v=1 m/s). These coefficient of friction values are significantly lower than the respective values of the conventional sintered sliding bearings.

The invention contemplates the application of the porous coating preferably by electroplating.

Electroplating is performed in a known manner. The soft metal (for example copper) with which the porous coating is to be made is provided in the anode in the electroplating process. The electrolytic bath conventionally incorporates the soft metal salts of the coating (for example copper salts), acids (e.g. sulphuric acid and hydrochloric acid) as well as other additives (e.g. brightener additive).

The current intensity and the electroplating time must be controlled to achieve a correct application of the porous coating. Therefore, once an intensity is fixed, long deposition times can results in a total blocking of the pores of the matrix and of the coating, in contrast short times may not be sufficient for obtaining a porous coating with the suitable thickness as to provide the desired technical effect, i.e., to allow the subsequent surface plastic deformation of the coating. On the other hand, once an electroplating time is fixed, it is found that for high current intensity values burning effects of the coating significantly weakening its mechanical strength and facilitating the detachment of the matrix can be seen, in contrast low intensity values can result in a coating with insufficient porosity and/or require excessively long deposition times harming the productivity of the manufacturing process.

To obtain, for example, a copper coating, it has been found that electroplating can conveniently be performed by applying a current intensity comprised in the range of 2 to 3 A/dm² and for a time of approximately 10 minutes. Porous coatings of 8 to 15 µm suitable for the object of the invention can be obtained for these values. It has further been observed that increasing the deposition time up to 30 minutes and with the same current intensity thicknesses of 20-25 µm with a greater blocking of pores on the free surface can be achieved.

Generally, it is suitable that the thickness of the porous coating produced by an electrolytic deposition process as has been described, is of 1 to 30 µm. Above these values, the pores are blocked before plasticizing or sufficient porosity is not created to enable self-lubricating the bearing. In contrast, the bearing behaves as though it did not have a coating for thinner electrolytic coating. The porous coating must preferably have a thickness between 8 and 15 µm.

The current intensity can be supplied continuously or by means of pulses. Cycles with a connection period of 8-15 seconds followed by a disconnection period of 1-3 seconds are typically used. Varying the ratio between the connection and disconnection time as required can optionally be considered for the purpose of the invention to obtain a required porosity in the coating.

On the other hand, the invention contemplates that the electrolytic bath can incorporate metal ions different from the soft metal of the coating which is provided in the anode during electroplating, it is thus possible to create alloys in situ in the coating. It is possible, for example, to obtain a bronze electrolytic coating using a copper anode and an electrolytic bath with tin ions.

The manufacturing process of the invention can comprise a step of impregnating the central hole of the matrix with a chemical pore filling product before the electroplating process and/or during said process, as well as its subsequent cleaning and removal from the inside of the matrix and coating pores. The function of the chemical filling product is to prevent the coating metal from being deposited inside the pores to prevent blocking by the metal which is applied during electroplating. Furthermore, another function of said chemical filling product is to facilitate coating porosity growth. The capillary forces facilitate the retention of chemical product inside the pores which flushes outwards during the coating process, which prevents pores from filling up during the same and finally allows generating a porous coating once the chemical filling product is removed and cleaned after electroplating.

An insoluble resin which remains adhered to the matrix during electroplating can be used as chemical pore filling product. For example, a polymer resin (e.g. methacrylic resin).

The use of other insoluble chemical products with the function of filling the pores during the step of applying the coating, suitable for promoting the appearance of cavities or pores in the coating is not ruled out. Furthermore, it is also considered that the chemical product may be soluble, such that said solubility property can be used to facilitate cleaning the product as well as to favor the growth of the pores in the coating while electroplating is performed.

Additionally, another technique which is also contemplated in the invention is based on the fact that the chemical pore filling product precipitates in the coating by means of a chemical reaction which takes place during the electroplating process. To that end impregnating the matrix with said chemical product is not required, but it can be introduced directly in the electrolytic bath, precipitating in the coating during electroplating. Organic acid metal salts of the coating can be used, which in addition to acting as an ion precursor of the electrolytic bath favors the deposition of the salts together with the metal ions, which can subsequently be removed by thermal decomposition being converted into Co₂ and H₂0. If the coating to be obtained is, for example, copper-based organic acid copper salts (e.g. copper acetate) can be used.

The chemical pore filling product is preferably removed by thermal decomposition. However, the use of any other removal and cleaning method is not ruled out, the same can be said of the salts of the electrolytic bath.

The process of the invention can additionally include a step of heating once the porous coating is applied in the matrix.

The step of heating dries the part obtained with the coating applied to the matrix and facilitates the removal of the salts of the electrolytic bath. The drying and removal of salts is relevant to prevent corrosion which can increasingly appear in the interphase between the coating and the matrix, said corrosion could cause cracking and detachment of the coating from the matrix, with the subsequent failure of the operating bearing.

The heating also allows removing the chemical pore filling product. The use of a thermoplastic polymer resin allows the same to flow flushing up towards the outer surface due to capillarity during heating, facilitating its removal and cleaning.

Once the coating is applied, heating part of the bearing also allows providing the desired technical effect of softening the coating. It is known that heating the metal materials facilitates plastic deformation and subsequent cold-shortness, desirable for sealing the pores of the required coating. Heating would thus reduce the risk of cracking and detachment of the coating from the matrix due to the fragility thereof in the case that said heat treatment is performed.

The heating preferably comprises a resintering step, which is performed once the porous coating has been applied by electroplating and which has the purpose of strengthening the links between the molecules of the material of the coating as well as fixing the coating to the matrix, providing a metallurgical attachment, replacing the existing electrochemical attachment in the simply electrodeposited coating. This resintering process takes place by heating. The heating temperature is preferably the sintering temperature of the soft metal of the coating; for the case that the metal of the coating is copper and the matrix is iron, since sintering temperature of copper is less than that of iron, advantageously the matrix does not suffer alteration in its properties as a consequence of resintering.

As described above, the porous coating is preferably applied by electroplating. However, the invention is not restricted to said technique and it is contemplated that the porous coating can be obtained by other alternative processes such as for example: galvanizing (cold or hot), thermal projection and electrophoresis. Another method which is particularly contemplated for obtaining the porous coating on the matrix is based on directly compacting a mixture of soft metal powder on the central hole of the matrix, before impregnating with a chemical pore filling product and followed by a resintering of the coating. The resintering would lead to metallurgical attachment between the molecules of the coating and the fixing between the coating and the matrix. The chemical filling product is retained in the pores of the matrix and of the coating, being able to flush outwards during the heating by capillarity, similar to the process described above for resintering the electrodeposited coating, which would allow preserving the porosity of the coating, matrix and interphase.

Theoretically, even though the invention is preferably conceived for coatings of metal materials, the invention also allows the use of soft materials which are not metal, such as for example a porous cured heat-stable resin.

On the other hand, the porous coating can optionally be spread in the central hole both throughout the entire contact surface, and in dips or grooves on said surface. The grooves and dips can be of any shape and configuration depending on the design requirements. The grooves can particularly be longitudinal, transversal, diagonal, spiral, etc.; they can also be continuous or discontinuous. These bearings can be manufactured by means of partially covering the contact surface of the matrix with a mask which prevents porous coating from being formed in the area covered by said mask. To obtain reliefs in the matrix, the area of the dips and grooves can be compacted during the powder metallurgy manufacturing process with a press incorporating low reliefs of said dips and grooves. Said compacting can be carried out while obtaining the green compact of the matrix. Likewise, the grooves or dips can also be obtained by calibrating or machining the already sintered matrix, before to the porous coating process.

The manufacturing process can additionally include a step of calibrating before lubricating the bearing. The function of calibrating, as indicated above, is to provide the bearing with a required dimensional precision and tolerance by means of pressing. Certain plasticizing and closing of the pores of the surface is achieved on the surface thereof as a result of applying pressure in the central hole of the bearing and the flattening of the coating, even though it is not an ad hoc surface plasticizing treatment.

The invention optionally contemplates that the process additionally includes a step of annealing the coating, after having subjected the coating to a cold-shortness (such as for example in calibrating). Annealing allows softening the coating, which can be useful for preventing the suitable placement of the shaft in the bearing, without the detriment of the technical effect sought to allow closing the pores of the coating by plasticizing.

Once the sintered sliding bearing with porous coating of the invention is obtained, selectively calibrated and annealed, It can be lubricated by impregnating with liquid lubricant. Liquid lubricants which can be used are for example: mineral oils, synthetic oils, mineral fats and synthetic fats.

Alternatively, it is also contemplated that the lubricant used in the sintered bearings of the invention is solid. Lubrication is performed by mixing the metal powder of the matrix and, where appropriate, the metal powder of the porous coating, with solid lubricant and the subsequent processing thereof as in the case where there is no solid lubricant. The solid lubricants can be: graphite, molybdenum disulphide, manganese sulphate and calcium fluoride. The graphite solid lubricant has the additional advantage which can results partially in a steel alloy during the sintering process.

Finally, the process of the invention also includes an additional sealing process for sealing the pores of the coating by plasticizing. This process preferably takes place once the lubrication has been applied to the bearing. The sealing processes which are contemplated are the conventional surface treatments for such purpose as well as those indicated below.

Plasticizing can naturally be performed when using the bearing for the first time. The rolling occurs due to the direct contact of the shaft on the bearing. The plastic deformation of the contact surface of the bearing is caused by the action of said direct contact pressure (hertzian pressure).

Lastly, it is contemplated that the rolling process for plasticizing the porous coating is performed artificially on site. The shaft can, for example, be made to rotate at a speed less than the minimum sliding speed, either continuously or with successive stops and start-ups, forward or back and forth, and particularly in a cyclic manner. In another variant, the rolling can be performed by the action of the pressure generated in the lubricant in hydrodynamic regime. In this case the hydrodynamic pressure acts on the contact surface of the bearing to plastify the material and therefore seal the pores of the surface. To that end, a lubricant having viscosity greater than the operating lubricant can be used, or the shaft can be subjected to a higher operating speed for a period of time or the rolling can be carried out with a shaft having a lower clearance, etc.; taking into account that the hydrodynamic pressure generated in the lubricant of the sliding bearings during the operation depends of the viscosity, the speed of movement and of clearance between shaft and bearing.

### Brief Description of the Drawings

To complement the description of the invention and for the purpose of aiding to better understand their technical features, the present specification is accompanied by the following drawings:
Figure 1 shows the longitudinal section of a tribological system, shaft and sliding bearing.
Figure 2 shows the cross-section of the tribological system of Figure 1, illustrating the hydrodynamic pressure acting in the contact area of the operating bearing.
Figure 3 shows the matrix and coating of the sintered sliding bearing in one embodiment of the invention in which the porous surface coating is continuously distributed on the contact surface.
Figure 4 shows the matrix and porous coating of the sintered sliding bearing according to another embodiment of the invention in which the coating is distributed on the contact surface in grooves.
Figure 5 shows the section detail of the matrix and porous coating of the bearing.

The symbols used in the drawings are the following:
e: Eccentricity of the shaft.
t: Coating thickness.
Ω: Shaft rotating speed with respect to the bearing.

The references used in the drawings are the following:
1: Bearing.
2: Shaft.
3: Lubricating film.
4: Hydrodynamic pressure.
5: Porous coating.
6: Matrix.
7: Pore.

### Detailed Description of an Embodiment

The invention is described in detail below with reference to the drawings.

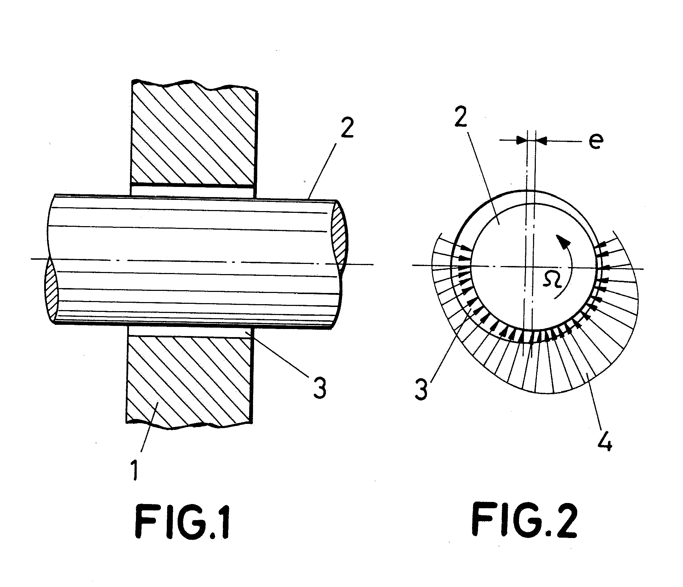

Figure 1 depicts a tribological system, object of the invention, having a sliding bearing (3), shaft (2) and lubricating film (3) located in the contact area. Figure 2 depicts a distribution of the hydrodynamic pressure (4) exerted by the lubricant (3) during the operation of the system.

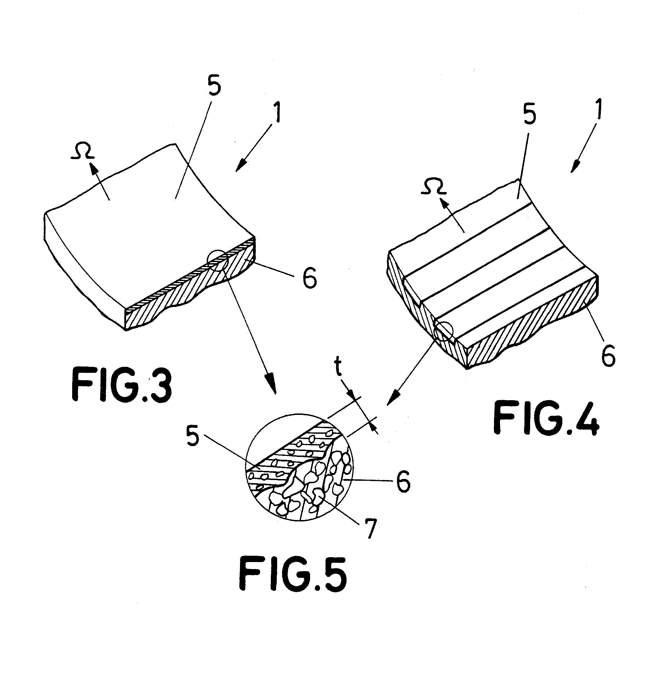

Figure 3 shows the different parts making up an embodiment of a sliding bearing manufactured according to a process in accordance with the invention, it also illustrates the different steps of said process as described below. The manufacturing process therefore comprises obtaining a matrix (6) of iron-based sintered alloy metal, which is obtained by a known powder metallurgy method. This powder metallurgy process comprises the following basic steps:
- Mixing the iron metal powder;
- Compacting the matrix (6); and
- Sintering the green compacted matrix (6). The sintering occurs at a temperature close to 75% of the melting temperature and in a controlled atmosphere. The compacting and sintering must be suitable for obtaining a required porosity of the matrix (6).

Once the matrix (6) is obtained the central hole is impregnated with a chemical pore filling product (7) such as methacrylic resin .

Subsequently, the porous surface coating (5) of the matrix is carried out with a copper layer. This coating is performed by an electroplating process with copper anode and electrolytic bath with copper salts.

The electroplating is performed in a controlled manner through current intensity and electroplating time variables. The current intensity is selected at approximately 2 - 3 A/dm², being applied for a time of approximately 10 minutes, such that it allows obtaining a porous coating (5) with a thickness (t) of 8 to 15 µm.

A second sintering or resintering is then carried out. In this step the part is subjected to heating, the temperature being raised to the sintering temperature of the copper (of the coating) which must be suitable in order to maintain the required porosity.

A step of calibrating the part is then performed, whereby the part is pressed until obtaining the desired dimensional tolerance. Surface plastification and sealing of the pores (7) of the coating (5) is partially achieved in this step.

Once the required cleaning is performed after the deposition process to remove all the salts used in said process and to remove the pore filler from the resin, which occurs by thermal decomposition, and once calibrated, the impregnation thereof in liquid lubricant (3) occurs.

Finally, the bearing (1) is subjected to a step of rolling in which the pores (7) of the contact surface of the bearing (1) is blocked by plasticizing the copper of the surface. This step of rolling can naturally be performed either while using the bearing for the first time or artificially, i.e., for example by means of start-up and stop load cycles of the shaft (2), plasticizing is achieved by means of hertzian pressure, or overloading the shaft (2) in hydrodynamic regime, plasticizing is achieved by means of hydrodynamic pressure (4).

Figure 4 illustrates a sliding bearing (1) configuration according to the invention in which the coating (5) is spread in grooves. For manufacturing these bearings the process comprises partially covering the surface of the grooves with a mask during electroplating preventing the coating from being produced in the area of the grooves. Before electroplating and during the powder metallurgy manufacturing process of the matrix (6), the relief of the surface of the grooves can be obtained by means of pressing the green compact of the matrix with a press incorporating low reliefs of the grooves. The surface of the grooves can also be obtained by machining the already sintered matrix (6) (devastating and/or grinding the surface) before applying the mask and the electroplating process.

Figure 5 shows a detail of the matrix (6) of sintered material with pores (7) and of the porous coating (5) once subjected to the rolling process.

## Claims

1. Process for manufacturing sintered sliding bearings, the bearings having an annular matrix with a central hole for coupling a rotating shaft; **characterised in that** it comprises the following steps:
- obtaining the matrix through a powder metallurgy manufacturing process; and
- applying a porous coating of soft metal on the central hole of the matrix;
such that the sealing by plastic deformation of the pores of the coating is facilitated.

2. Process for manufacturing sintered sliding bearings according to claim 1, **characterised in that** the metal of the porous coating is copper-based metal.

3. Process for manufacturing sintered sliding bearings according to one of claims 1-2, **characterised in that** the matrix is of hard metal.

4. Process for manufacturing sintered sliding bearings according to claim 3, **characterised in that** the metal of the matrix is iron-based metal.

5. Process for manufacturing sintered sliding bearings according to one of claims 1-4, **characterised in that** the porous coating is applied by electroplating.

6. Process for manufacturing sintered sliding bearings according to one of claims 1-5, **characterised in that** the porous coating has a thickness comprised in the range of 1 to 30 µm.

7. Process for manufacturing sintered sliding bearings according to claim 6, **characterised in that** the porous coating has a thickness comprised in the range of 8 to 15 µm.

8. Process for manufacturing sintered sliding bearings according to one of claims 1-7, **characterised in that** it comprises the following steps:
- impregnating the central hole of the matrix with a chemical pore filling product;
- electroplating process; and
- removing the chemical pore filling product.

9. Process for manufacturing sintered sliding bearings according to claim 8, **characterised in that** the chemical pore filling product is a polymer resin.

10. Process for manufacturing sintered sliding bearings according to one of claims 1-9, **characterised in that** it includes a step of heating once the porous coating is applied in the matrix.

11. Process for manufacturing sintered sliding bearings according to claim 10, **characterised in that** the step of heating comprises a resintering, in which the porous coating is sintered once applied in the matrix.

12. Process for manufacturing sintered sliding bearings according to one of claims 1-11, **characterised in that** it additionally includes a step of calibrating.

13. Process for manufacturing sintered sliding bearings according to claim 12, **characterised in that** it additionally includes a step of lubricating by impregnating with liquid lubricant selected from the group consisting of: mineral oils, synthetic oils, mineral fats and synthetic fats.

14. Process for manufacturing sintered sliding bearings according to one of claims 1-13, **characterised in that** it additionally comprises a process for sealing the pores of the porous coating by plasticizing; the plasticizing sealing process is selected from the group consisting of: rolling by the direct contact pressure of the shaft, rolling by the hydrodynamic pressure of the shaft, compacting the coating and a combination thereof.

15. Sintered sliding bearing made following a manufacturing process according to any claims 1 to 14.
